# EUROPÄISCHE PATENTANMELDUNG

(11) **EP 1 195 199 A1**
(43) Veröffentlichungstag der Anmeldung: **10.04.2002**
(21) Anmeldenummer: 01122606.5
(22) Anmeldetag: 26.09.2001
(51) Int. Cl.: B01J 41/14, B01J 45/00, C02F 1/42, B01J 41/04

(54) **Verwendung monodisperser Ionenaustauscher zur Arsen-/ Antimonentfernung**

(30) Priorität: 09.10.2000 DE 10049807
(71) Anmelder: BAYER AG, 51368 Leverkusen (DE)
(72) Erfinder: Lailach, Günter, Dr., 47799 Krefeld (DE); Klipper, Reinhold, Dr., 50933 Köln (DE)

(57) **Zusammenfassung**

Die vorliegende Erfindung betrifft die Verwendung von monodispersen Ionenaustauschern, insbesondere von monodispersen Anionenaustauschem oder monodispersen Chelatharzen zur selektiven Entfernung von Arsen und/oder Antimon in Form von AsF₆⁻-Ionen oder SbF₆⁻-Ionen aus wässrigen Lösungen.

## Beschreibung

Die vorliegende Erfindung betrifft die Verwendung monodisperser Amino-/Ammonium-funktionalisierter Ionenaustauscher oder monodisperser Chelatharze zur selektiven Entfernung von Arsenionen oder Antimonionen aus wässrigen Lösungen.

Etliche Mineralien in der Natur sind mit chemischen Elementen verunreinigt, die bei Aufschlußprozessen in erheblichem Maße anfallen und bei der Reinigungsprozedur zur Gewinnung der eigentlichen chemischen Verbindung als unerwünschtes Nebenprodukt anfallen. Eines dieser chemischen Elemente ist Arsen, wie es im Flußspat vorkommt und das bei der Synthese von Fluorwasserstoff anfällt oder aber auch Antimon. Die Entsorgung der Arsen-haltigen bzw. Antimon-haltigen Produktionsrückstände bereitet sehr hohen Aufwand und hohe Kosten, insbesondere dann, wenn diese Rückstände mit Wasser in Berührung kamen und dieses Wasser aus Produktionskreisläufen dem Naturkreislauf wieder zugeführt werden soll.

Aus DD 254 373 A1 ist ein Verfahren zur Gewinnung hochreiner Fluorwasserstoffsäure bekannt, wobei allerdings Arsen durch einen heterodispersen Ionenaustauscher mit kemständigen Thiolgruppen in H⁺-Form zum Einsatz kommt.

In WO 89/11321 wird ein Verfahren zur Herstellung von Fluorwasserstoffsäure beschrieben durch einen Apparat, der sowohl mit Anionenaustauscher, als auch mit Kationenaustauscher betrieben wird, um beispielsweise Arsen aus dem Reaktionsmedium zu entfernen. Bevorzugt werden schwachbasische Anionenaustauscher wie Dowex M-43® oder Biorad AGW-W4A® , aber auch Amberlite 900® und Lewatit MP-62® eingesetzt. Die Harze sind mit tertiären Aminogruppen fünktionalisiert, haben jedoch allesamt heterodisperse Struktur.

Aus DE-A 19 958 390 ist die Verwendung von monodispersen Adsorberharzen unter anderem zur Arsen-Entfernung aus wässrigen Lösungen bekannt. Diese sind jedoch nicht mit Amino-/Ammoniumgruppen fünktionalisiert.

Aufgabe der vorliegenden Erfindung war daher einerseits die Bereitstellung von insbesondere für Arsen-Ionen und/oder Antimon-Ionen geeigneten Ionenaustauschern, die während Syntheseprozessen Arsen-Ionen und/oder Antimon-Ionen selektiv aus Reaktionslösungen entfernen, auch bei höheren Temperaturen über einen längeren Zeitraum hinweg zuverlässig funktionieren und es somit erlauben, das Wasser aus Produktionskreisläufen wieder in die Umwelt zu entlassen.

Andererseits besteht aber auch aus ökologischen oder hygienischen Gründen das Problem, Arsenverbindungen oder Antimonverbindungen möglichst vollständig aus verdünnten wässrigen Lösungen abzutrennen. Solche Lösungen können Sickerwässer aus dem Bereich von Abraumhalden des Bergbaus oder der Metallverhüttung sein, Sickerwässer von Deponien oder Waschlösungen aus Müllverbrennungen, aber auch Prozesswasser der Elektroindustrie oder der chemischen Industrie. Dabei bereitet die Abtrennung der Arsenverbindungen und der Antimonverbindungen wegen der amphoteren Eigenschaften der Übergangsmetalle regelmäßig Probleme. Insbesondere ist die Anwendung von Ionenaustauschern, die sonst zur Entfernung von niedrig konzentrierten Ionen eine bevorzugte Methode darstellt, bei Arsenverbindungen und bei Antimonverbindungen wenig erfolgreich.

Es sollte deshalb generell möglich sein, mit Arsen und/oder Antimon kontaminierte Grund- oder Oberflächengewässer mit Hilfe der erfindungsgemäß monodispersen Amino-/Ammonium-funktionalisierten Ionenaustauscher und monodispersen Chelatharze soweit von Arsen und Antimon zu befreien, dass diese in den Naturkreislauf wieder zurückgeführt werden können.

Überraschend wurde nun gefunden, dass sich Arsen und/oder Antimon mit hoher Selektivität mittels monodisperser Anionenaustauscher, die mit Aminogruppen und Ammoniumgruppen funktionalisiert sind bzw. mit monodispersen Chelatharzen, aus wässrigen Lösungen entfemen lassen, sofern die Arsenverbindungen und die Antimonverbindungen zuvor in Hexafluoroarsenationen und/oder in Hexafluorantimonationen überführt werden. Da AsF₆⁻-Ionen und SbF₆⁻-Ionen äußerst stabil sind, können sie aus der Oxidationsstufe +3 durch Einwirkung von Oxidationsmitteln wie beispielsweise Fluor, Wasserstoffperoxid oder anderen in Gegenwart von Fluoridionen aktiven Oxidationsmitteln aus gelösten Arsenverbindungen oder gelösten Antimonverbindungen erzeugt werden. Bevorzugt werden in wässrigen Lösungen die Arsenverbindungen oder die Antimonverbindungen in Gegenwart von Fluoridionen elektrolytisch oxidiert und zu AsF₆⁻-Ionen oder SbF₆⁻-Ionen umgesetzt.

Die Erfindung betrifft daher die Verwendung von monodispersen Anionenaustauschern oder monodispersen Chelatharzen, insbesondere von monodispersen Amino-/Ammonium-funktionalisierten Anionenaustauschern oder monodispersen Chelatharzen zur selektiven Adsorption von Arsenionen und/oder Antimonionen aus wässrigen Lösungen sowie ein Verfahren zur Abtrennung von Arsenionen und/oder Antimonionen aus wässrigen Lösungen. Sofern die Arsen- oder Antimonverbindungen nicht in Oxidationsstufe +5 vorliegen, werden diese zuvor oxidativ, in AsF6⁻-Ionen oder SbF₆⁻-Ionen überführt und diese aus wässrigen Lösungen, insbesondere bevorzugt aus wässrigen Lösungen mit neutralem oder schwach-alkalischem, aber auch mit saurem pH-Wert adsorbiert.

Die für die erfindungsgemäße Verwendung einzusetzenden Anionenaustauscher oder Chelatharze liegen als Perlpolymerisate in monodisperser Form vor und sind mit primären oder tertiären Aminogruppen oder quartären Ammoniumgruppen oder deren Gemischen funktionalisiert oder es sind monodisperse Chelatharze wie sie aus DE-A 19 940 866 bekannt sind, deren Inhalt von der vorliegenden Anmeldung mit umfasst wird.

Die erfindungsgemäß einzusetzenden Anionenaustauscher oder Chelatharze müssen monodispers sein.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von + 10 % des häufigsten Durchmessers um den häufigsten Durchmesser herum liegt. Beispielsweise liegen dann bei einem Perlpolymerisat, dessen Kügelchen einen häufigsten Durchmesser von 0,50 mm aufweisen, mindestens 90 Volumen- oder Massen-% in einem Größenintervall zwischen 0,45 mm und 0,55 mm, oder bei einem Perlpolymerisat, dessen Kügelchen einen häufigsten Durchmesser von 0,70 mm aufweisen mindestens 90 Volumen- oder Massen-% in einem Größenintervall zwischen 0,77 mm und 0,63 mm. Die vorliegende Erfindung betrifft die Verwendung von Perlpolymerisaten deren monodisperse Eigenschaft im Herstellungsprozess begründet liegt, also erhältlich durch Jetten, seed/feed oder Direktverdüsung. Letztere Herstellungsverfahren werden beispielsweise in US 3 922 255, US 4 444 961 und US 4 427 794 beschrieben.

Die erfindungsgemäß einzusetzenden Anionenaustauscher oder Chelatharze bestehen aus vernetzten Polymerisaten ethylenisch einfach ungesättigter Monomerer, die zum überwiegenden Teil aus mindestens einer Verbindung der Reihe Styrol, Vinyltoluol, Ethylstyrol, α-Methylstyrol oder deren kernhalogenierte Derivate wie Chlorstyrol bestehen; sie können daneben auch eine oder mehrere Verbindungen aus der Reihe Vinylbenzylchlorid, Acrylsäure, ihre Salze oder ihre Ester, insbesondere ihren Methylester, ferner Vinylnaphthaline, Vinylxylole oder die Nitrile oder Amide von Acryl- oder Methacrylsäuren enthalten.

Die Polymerisate sind vernetzt - vorzugsweise durch Copolymerisation mit vemetzenden Monomeren mit mehr als einer, vorzugsweise mit 2 oder 3, copolymerisierbaren C=C-Doppelbindung(en) pro Molekül. Solche vernetzenden Monomeren umfassen beispielsweise polyfunktionelle Vinylaromaten wie Di- oder Trivinylbenzole, Divinylethylbenzol, Divinyltoluol, Divinylxylol, Divinylethylbenzol, Divinylnaphthalin, polyfünktionelle Allylaromaten wie Di- oder Triallylbenzole, polyfunktionelle Vinyl- oder Allylheterocyclen wie Trivinyl- oder Triallylcyanurat oder -isocyanurat, N,N'-C₁-C₆-Alkylendiacrylamide oder -dimethacrylamide wie N,N'-Methylendiacrylamid oder -dimethacrylamid, N,N'-Ethylendiacrylamid oder -dimethacrylamid, Polyvinyl- oder Polyallylether gesättigter C₂-C₂₀-Polyole mit 2 bis 4 OH-Gruppen pro Molekül, wie z.B. Ethylenglykoldivinyl- oder -diallylether oder Diethylenglykoldivinyl- oder -diallylether, Ester ungesättigter C₃-C₁₂-Alkohole oder gesättigter C₂-C₂₀-Polyole mit 2 bis 4 OH-Gruppen pro Molekül wie Allylmethacrylat, Ethylenglykoldi(meth)acrylat, Glycerintri(meth)acrylat, Pentaerythrittetra(meth)acrylat, Divinylethylenharnstoff, Divinylpropylenharnstoff, Divinyladipat, aliphatische oder cycloaliphatische Olefine mit 2 oder 3 isolierten C=C-Doppelbindungen wie Hexadien-1,5, 2,5-Dimethylhexadien-1,5, Octadien-1,7, 1,2,4-Trivinylcyclohexan. Als vernetzende Monomere haben sich Divinylbenzol (als Isomerengemisch) sowie Mischungen aus Divinylbenzol und aliphatischen C₆-C₁₂-Kohlenwasserstoffen mit 2 oder 3 C=C-Doppelbindungen besonders bewährt. Die vernetzenden Monomeren werden im allgemeinen in Mengen von 1 bis 80 Gew.-%, vorzugsweise 2 bis 25 Gew.-%, bezogen auf die Gesamtmenge der eingesetzten polymerisierbaren Monomeren, eingesetzt.

Die vernetzenden Monomeren müssen nicht in reiner Form, sondern können auch in Form ihrer technisch gehandelten Mischungen minderer Reinheit (wie z.B. Divinylbenzol in Mischung mit Ethylstyrol) eingesetzt werden.

Die Copolymerisation von Monomer und Vernetzer wird üblicherweise durch Radikalbildner initiiert, die monomerlöslich sind. Bevorzugte radikalbildende Katalysatoren umfassen beispielsweise Diacylperoxide wie Diacetylperoxid, Dibenzoylperoxid, Di-p-chlorbenzoylperoxid, Lauroylperoxid, Peroxyester wie tert.-Butylperoxyacetat, tert.-Butylperoctoat, tert.-Butylperoxypivalat, tert.-Butylperoxy-2-ethylhexanoat, tert.-Butylperoxybenzoat, Dicyclohexylperoxydicarbonat, Alkylperoxide wie Bis-(tert.-butylperoxybutan), Dicumylperoxid, tert.-Butylcumylperoxid, Hydroperoxide wie Cumolhydroperoxid, tert.-Butylhydroperoxid, Ketonperoxide wie Cyclohexanon-hydroperoxid, Methylethylketonhydroperoxid, Acetylacetonperoxid oder - vorzugsweise - Azoisobutyrodinitril.

Die Radikalbildner können in katalytischen Mengen, d.h. vorzugsweise 0,01 bis 2,5 Gew.-%, insbesondere 0,12 bis 1,5 Gew.-%, bezogen auf die Summe von Monomer und Vernetzer, eingesetzt werden.

Die wasserunlösliche Monomer/Vernetzer-Mischung wird einer wässrigen Phase zugesetzt, die vorzugsweise zur Stabilisierung der Monomer/Vernetzer-Tröpfchen in der dispersen Phase und den daraus entstehenden Perlpolymerisaten mindestens ein Schutzkolloid enthält. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureestern bevorzugt. Sehr gut geeignet sind auch Cellulosederivate, insbesondere Celluloseether oder Celluloseester, wie Methylhydroxyethylcellulose, Methylhydroxypropylcellulose, Hydroxyethylcellulose oder Carboxymethylcellulose. Die Einsatzmenge der Schutzkolloide beträgt im allgemeinen 0,02 bis 1 Gew.-%, vorzugsweise 0,05 bis 0,3 Gew.-%, bezogen auf die Wasserphase.

Das Gewichtsverhältnis wässrige Phase/organische Phase liegt im Bereich von vorzugsweise 0,5 bis 20, insbesondere 0,75 bis 5.

Nach einer besonderen Ausführungsform werden die Basispolymerisate während der Polymerisation in Anwesenheit eines Puffersystems hergestellt. Bevorzugt werden Puffersysteme, die den pH-Wert der Wasserphase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Die Puffer-Konzentration in der Wasserphase beträgt vorzugsweise 0,5 bis 500 mmol, insbesondere 2,5 bis 100 mmol pro Liter wässriger Phase.

Zur Herstellung monodisperser Perlpolymerisate mit möglichst einheitlicher Teilchengröße wird der Monomerstrom in die wässrige Phase eingedüst, wobei durch schwingungsangeregten Strahlzerfall und/oder Mikroverkapselung der entstandenen Monomertröpfchen die Erzeugung von Tröpfchen gleichmäßiger Größe unter Vermeidung von Koaleszenz gewährleistet wird (EP 0 046 535 B1 und EP 0 051 210 B1).

Die Polymerisationstemperatur richtet sich nach der Zerfallstemperatur des eingesetzten Initiators. Sie liegt im allgemeinen zwischen 50 und 150°C, vorzugsweise zwischen 55 und 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C, begonnen und die Reaktionstemperatur mit fortschreitendem Polymerisationsumsatz gesteigert wird.

Die resultierenden Perlpolymerisate können als solche oder aber über eine durch ein sogenanntes seed/feed-Verfahren zugängliche Zwischenstufe mit vergrößerter Teilchengröße der Funktionalisierung zugeführt werden. Ein seed/feed-Verfahren beinhaltet die Verfahrensschritte, das ursprünglich erhaltene Polymerisat ("seed") mit copolymerisierbaren Monomeren anzuquellen ("feed") und das in das Polymerisat eingedrungene Monomer zu polymerisieren. Geeignete seed/feed-Verfahren werden beispielsweise in den EP 0 098 130 B1, EP 0 101 943 B1 oder EP 0 802 936 B1 beschrieben.

Die Ionenaustauscher können als mikroporöse oder gelförmige bzw. makroporöse Perlpolymerisate vorliegen.

Die Begriffe mikroporös oder gelförmig bzw. makroporös sind aus der Fachliteratur bekannt, beispielsweise aus Adv. Polymer Sci., Vol. 5, Seiten 113 - 213 (1967).

Damit die erfindungsgemäß zu verwendenden monodispersen Ionenaustauscher die makroporöse Struktur erhalten setzt man der Monomer/Vemetzer-Mischung Porogene zu, wie sie beispielsweise bei Seidl et al., Adv. Polym. Sci., Vol. 5 (1967), S. 113 bis 213, beschrieben sind, z.B. aliphatische Kohlenwasserstoffe, Alkohole, Ester, Ether, Ketone, Trialkylamine, Nitroverbindungen, vorzugsweise Hexan, Octan, Isooctan, Isododecan, Isodecan, Methylisobutylketon oder Methylisobutylcarbinol, in Mengen von 1 bis 150 Gew.-%, vorzugsweise 40 bis 100 Gew.-%, insbesondere 50 bis 80 Gew.-%, bezogen auf die Summe von Monomer und Vernetzer.

Makroporöse Perlpolymerisate haben Porendurchmesser von ca. 50 Angström und größer.

Ohne Porogene erhält man Ionenaustauscher mit mikroporöser oder gelförmiger Struktur.

Die erfindungsgemäß zur AsF₆⁻- und/oder SbF₆-Adsorption, zu verwendenden Anionenaustauscher und Chelatharze selber werden durch Funktionalisierung der Perlpolymerisate hergestellt.

Ein technisch ausgeübtes Verfahren zur Herstellung monodisperser Anionenaustauscher, die mit Aminogruppen und/oder Ammoniumgruppen funktionalisiert sind, und monodisperser Chelatharze, ausgehend von Perlpolymerisaten auf der Basis von Styrol und Divinylbenzol (DVB), geht in der Weise vor, dass die in den Perlpolymerisaten vorliegenden aromatischen Ringsysteme zunächst mit Chlormethylgruppen funktionalisiert (Chlormethylierung) und anschließend mit Aminen bzw. Iminodiessigsäure oder Thioharnstoff umgesetzt werden.

Als Amine werden bevorzugt Trimethylamin, Dimethylaminoethanol, Triethylamin, Tripropylamin, Tributylamin, Ammoniak, Urotropin, Aminodiessigsäure eingesetzt. Hierbei entstehen Anionenaustauscher bzw. Chelatharze mit quartären Ammoniumgruppen oder primären oder sekundären Aminogruppen, beispielsweise Aminomethylgruppen, Dimethylaminomethylgruppen, Trimethylaminomethylgruppen, Dimethylaminoethylhydroxyethylgruppen, Iminodiessigsäuregruppen, Thiohamstoffgruppen oder Aminomethylphosphonsäuregruppen.

Perlpolymerisate mit Aminomethylgruppen können mit Chloressigsäure zu Ionenaustauschern mit Iminodiessigsäuregruppen oder mit Formalin/Phosphor(3)verbindungen zu Ionenaustauschern mit Aminomethylphosphonsäuregruppen umgesetzt werden.

Ein weiteres technisch ausgeübtes Verfahren zur Herstellung der erfindungsgemäß zur AsF₆⁻- und/oder SbF₆⁻-Adsorption zu verwendenden Anionenaustauscher und Chelatharze, ausgehend von Perlpolymerisaten auf Basis von Styrol und Divinylbenzol (DVB), geht in der Weise vor, dass die in den Perlpolymerisaten vorliegenden aromatischen Ringsysteme durch Umsetzung mit Phthalimidderivaten wie Bis(phthalimidomethyl)ether, dem SO₃-Addukt des Bis(phthalimidomethyl)ether oder N-Acetoxymethylphthalimid und weitere Umsetzungsschritte zu Anionenaustauschern unterschiedlicher Basizität oder Chelatharzen umgesetzt werden (siehe u.a. US-A 3 989 650 oder EP-A 0 046 535 B1).

Zur Entfernung der arsenhaltigen und/oder antimonhaltigen Anionen können aber auch makroporöse oder gelförmige monodisperse Anionenaustauscher auf Acrylesterbasis eingesetzt werden. Vernetzte, monodisperse Perlpolymerisate auf Acrylesterbasis werden mit Polyaminen wie z.B. N,N-Dimethylpropylendiamin-1,3 unter Amidbildung umgesetzt. Es entsteht dabei ein schwach basischer Anionenaustauscher, der mit z.B. Chlormethan zu stark basischen Anionenaustauschern umgesetzt werden kann (siehe z.B. Ullmann's Encyclopedia of Industrial Chemistry, Vol. A 14, Seite 398).

Die praktischen Arbeiten zur vorliegenden Erfindung haben gezeigt, dass für die Adsorption aus neutralen oder schwach-alkalischen, wässrigen Lösungen bevorzugt monodisperse Ionenaustauscher geeignet sind, die quartäre Ammoniumgruppen enthalten. Für die Adsorption aus sauren Lösungen sind sowohl Ionenaustauscher mit quartären Ammoniumgruppen als auch solche mit tertiären oder primären Aminogruppen oder Gemischen derselben geeignet. Im Hinblick auf die Selektivität der AsF₆⁻- und der SbF₆⁻-Adsorption werden Anionenaustauscher mit tertiären Aminogruppen bevorzugt.

Aufgrund der besonders guten Adsorption von AsF₆⁻-Ionen und von SbF₆⁻-Ionen empfiehlt sich die Umsetzung aller zu adsorbierenden Arsen- und Antimon-Ionen in den Adsorptionsmedien zur Hexafluorarsensäure oder HSbF₆ oder Verbindungen derselben, bevorzugt den Salzen der Hexafluorarsensäure oder HSbF₆, besonders bevorzugt zum Natrium- oder Kaliumsalz der Hexafluorarsensäure oder HSbF₆, die besonders bevorzugt an den erfindungsgemäß zu verwendenden Ionenaustauschern adsorbiert werden.

Die besonders günstigen hydrodynamischen Eigenschaften monodisperser Anionenaustauscher und monodisperser Chelatharze erlauben deshalb die Reinigung von Prozesswasser der Elektroindustrie, insbesondere der Halbleiterindustrie, oder der chemischen Industrie von Verunreinigungen durch Arsen oder Antimon, insbesondere bei stark verdünnten Lösungen dieser Metalle bzw. ihrer Salze.

### Beispiel

20 l Sickerwasser mit 3,5 ppm As werden mit 2,8 g 40 %iger HF und 10 ml H₂O₂-Lösung versetzt. Anschließend wird die Flüssigkeit durch eine Ionenaustauschersäule geleitet, die mit Lewatit® VPOC 1094 gefüllt ist, einem monodispersen Harz auf Styrol-Divinylbenzol-Basis mit 25 % quartären Ammonium- und 75 % tertiären Aminogruppen. Der Arsengehalt der austretenden Flüssigkeit wurde als < 0,05 ppm Arsen pro Liter Flüssigkeit bestimmt.

## Patentansprüche

1. Verwendung von monodispersen Anionenaustauschern oder monodispersen Chelatharzen zur selektiven Adsorption von Arsen und/oder Antimon, **dadurch gekennzeichnet, dass** diese in Form von SbF₆⁻-Ionen oder AsF₆⁻-Ionen aus wässrigen Lösungen adsorbiert werden.

2. Verwendung gemäß Anspruch 1, **dadurch gekennzeichnet, dass** die monodispersen Anionenaustauscher oder monodispersen Chelatharze mit quartären Ammoniumgruppen oder tertiären oder primären Aminogruppen oder deren Gemischen funktionalisiert sind.

3. Verwendung gemäß der Ansprüche 1 und 2, **dadurch gekennzeichnet, dass** die monodispersen Anionenaustauscher oder monodispersen Chelatharze makroporös, gelförmig oder mikroporös sind.

4. Verwendung gemäß Anspruch 1, **dadurch gekennzeichnet, dass** die monodispersen Anionenaustauscher oder Chelatharze aus Perlpolymerisaten auf Basis ungesättigter Monomere der Reihe Styrol, Vinyltoluol, α-Methylstyrol, oder deren kernhalogenierte Derivate oder auf Acrylbasis aufgebaut sind.

5. Verfahren zur Adsorption von Arsen oder Antimon aus wässrigen Lösungen, **dadurch gekennzeichnet, dass** die Arsenverbindungen oder Antimonverbindungen in Gegenwart von Fluoridionen an monodispersen Anionenaustauschern oder monodispersen Chelatharzen adsorbiert werden, nachdem sie zuvor in AsF₆⁻-Ionen und/oder SbF₆⁻-Ionen überführt wurden.

6. Verfahren gemäß Anspruch 5, **dadurch gekennzeichnet, dass** die Adsorption der SbF₆⁻-Ionen und/oder der AsF₆⁻-Ionen aus neutralen, sauren oder schwach-alkalischen wässrigen Lösungen erfolgt.

7. Verwendung gemäß Anspruch 1, **dadurch gekennzeichnet, dass** Arsen oder Arsenverbindungen oder Antimon oder Antimonverbindungen aus Wasser aus Produktionskreisläufen, Grund- oder Oberflächengewässern entfernt wird.

8. Verwendung monodisperser Anionenaustauscher oder monodisperser Chelatharze, die mit Aminogruppen und/oder Ammoniumgruppen funktionalisiert sind, zur Reinigung von Prozesswasser der Elektroindustrie, der chemischen Industrie von Sickerwässern oder von Waschlösungen von Verunreinigungen durch Arsen oder Antimon.
